# EUROPÄISCHE PATENTSCHRIFT

(11) **EP 1 460 416 B1**
(45) Veröffentlichungstag und Bekanntmachung des Hinweises auf die Patenterteilung: **08.09.2010**
(21) Anmeldenummer: 04000680.1
(22) Anmeldetag: 15.01.2004
(51) Int. Cl.: G01N 27/411

(54) **Festelektrolyt-Messeinrichtung zur Bestimmung der Sauerstoffaktivität in Metall- oder Schlackeschmelzen und Verwendung einer solchen Messeinrichtung**
Solid electrolyte measuring device for the determination of oxygen activity in metal or slag melts and usage of such a measuring device
Dispositif de mesure à électrolyte solide pour la détermination de l'activité de l'oxygène dans des métaux ou des scories en fusion et utilisation d'un tel dispositif

(30) Priorität: 07.03.2003 DE 10310387
(43) Veröffentlichungstag der Anmeldung: 22.09.2004
(73) Patentinhaber: Heraeus Elektro-Nite International N.V., 3530 Houthalen (BE)
(72) Erfinder: Habets, Danny, 3600 Genk (BE)
(74) Vertreter: Kühn, Hans-Christian

(56) Entgegenhaltungen:
- EP-A- 0 295 112
- DE-B- 2 600 103
- US-A- 5 332 449
- PATENT ABSTRACTS OF JAPAN vol. 009, no. 177 (P-375), 23. Juli 1985 (1985-07-23) -& JP 60 052763 A (SUMITOMO ARUMINIUMU SEIREN KK), 26. März 1985 (1985-03-26) -& DATABASE WPI Section Ch, Week 198518 Derwent Publications Ltd., London, GB; Class J04, AN 1985-108195 XP002295130 & JP 60 052763 A (SUMITOMO ALUM REFIN), 26. März 1985 (1985-03-26)
- KEQIN HUANG ET AL: "A NEW ELECTROCHEMICAL SENSOR FOR RAPID DETERMINATION OF SILICON CONTENT IN CARBON SATURATED IRON" SOLID STATE IONICS, NORTH HOLLAND PUB. COMPANY. AMSTERDAM, NL, Bd. 53-56, Nr. PART 1, 1. Juli 1992 (1992-07-01), Seiten 24-29, XP000399212 ISSN: 0167-2738
- IWASE M ET AL: "SOME RECENT DEVELOPMENTS IN SOLID STATE GALVANIC SENSORS" PROCEEDINGS OF THE SYMPOSIUM ON HIGH TEMPERATURE MATERIALS CHEMISTRY.;DENVER, CO, USA, Bd. 82-1, 1982, Seiten 431-455, XP009036006 Proc Electrochem Soc 1982 Electrochem Soc, Pennington, NJ, USA
- OKTAY ENVER ET AL: "On the hot metal desulfurization" STEEL RES;STEEL RESEARCH MAR 1995 VERLAG STAHLEISEN MBH, DUESSELDORF, GERMANY, Bd. 66, Nr. 3, März 1995 (1995-03), Seiten 93-95, XP009036007

## Beschreibung

Die Erfindung betrifft eine Messeinrichtung zur Bestimmung der Sauerstoffaktivität in Metalloder Schlackeschmelzen mit einem an einem Ende eines Trägerrohrs angeordneten Messkopf, an dem eine elektrochemische Messzelle angeordnet ist, wobei die elektrochemische Messzelle ein einseitig geschlossenes Festelektrolytröhrchen aufweist, das an seinem geschlossenen Ende ein Referenzmaterial und eine Elektrode enthält, wobei die Elektrode aus dem entgegengesetzten Ende des Festelektrolytröhrchens hinausragt. Des weiteren betrifft die Erfindung ein Festelektrolytröhrchen für eine elektrochemische Messzelle.

Derartige Messeinrichtungen sind beispielsweise aus DE 31 52 318 C2 bekannt. Der hier beschriebene Sensor dient zur Messung der Konzentration von Sauerstoff in geschmolzenem Metall. Ähnliche Messeinrichtungen sind auch aus US 3,578,578, DE 28 10 134 A1 oder DE 26 00 103 C2 bekannt.

Es besteht der Bedarf, neben Sauerstoff auch andere in Metallschmelzen enthaltene Stoffe zu messen. Der Erfindung liegt daher die Aufgabe zu Grunde, eine einfache Messeinrichtung sowie ein entsprechendes Festelektrolytröhrchen anzugeben, mit dem neben dem Sauerstoffgehalt auch die Konzentration weiterer Elemente ermittelt werden kann.

Die Aufgabe wird dadurch gelöst, dass das Festelektrolytröhrchen an seiner äußeren Oberfläche eine Beschichtung aus einer Mischung aus Kalziumzirkonat mit einem Fluorid aufweist. Es hat sich gezeigt, dass damit die Ermittlung beispielsweise der Konzentration von Schwefel, Silizium oder Kohlenstoff in Schmelzen möglich ist. Der Effekt wird so erklärt, dass beispielsweise der in flüssigem Metall befindliche Schwefel mit dem CaO aus dem Kalziumzirkonat reagiert, wobei Sauerstoff als Reaktionsprodukt erhalten wird und die Änderung der Sauerstoffaktivität an der Oberfläche des Festelektrolyten gemessen und mit dem Schwefel korreliert wird. Die Messeinrichtung kann in Metall- oder Schlackeschmelzen, insbesondere in Stahl- oder Eisenschmelzen, zur Messung der Konzentration von Schwefel, Silizium oder Kohlenstoff verwendet werden. Dadurch ergibt sich eine schnelle Messung. Vorteilhaft ist es, wenn die Messeinrichtung neben der elektrochemischen Messzelle einen Temperatursensor, beispielsweise ein Thermoelement aufweist, so dass auch die Temperatur der Metallschmelze gemessen werden kann. Silizium ist mit dem Schwefelgehalt korreliert, Kohlenstoff kann aus dem Silizium-Kohlenstoff-Temperaturgleichgewicht des flüssigen Metalles berechnet werden.

Durch die erfindungsgemäße Messeinrichtung kann eine Probenanalyse im Labor vermieden werden, so dass im Produktionsprozess eine erhebliche Zeiteinsparung und damit eine bessere und schnellere Beeinflussung des Produktionsprozesses erzielt werden kann.

Vorteilhafte Ausgestaltungen der Erfindung sind in den Unteransprüchen angegeben. Zweckmäßig ist es, dass das Fluorid mindestens eines aus der Gruppe CaF₂, NaF, SrF₂, BaF₂, MgF₂ ist. Vorteilhaft für eine hohe Messempfindlichkeit ist es, dass das Kalziumzirkonat stöchiometrisch ist. Ebenso ist es von Vorteil, dass die Schichtdicke etwa 10 bis 100 µm, insbesondere 30 µm beträgt. Dabei reicht eine dünnere Schicht bei höheren Einsatztemperaturen (beispielsweise vor einer Entschwefelungsbehandlung) aus. Die Antwortzeit ist dabei recht kurz. Bei niedrigeren Einsatztemperaturen (beispielsweise nach der Entschwefelungsbehandlung) ist eine dickere Schicht erforderlich. Die Antwortzeit ist dann etwas größer.

Das Festelektrolytröhrchen ist vorteilhafterweise stabilisiertes ZrO₂. Die Schicht kann die äußere Oberfläche des Festelektrolytröhrchens auch nur teilweise bedecken, wobei mindestens die Oberfläche in dem Bereich des Röhrchens beschichtet sein sollte, in dem die Bezugsmasse angeordnet ist.

Nachfolgend wird ein Ausführungsbeispiel der Erfindung anhand einer Zeichnung erläutert. In der Zeichnung zeigt
- Figur 1: eine Messeinrichtung und
- Figur 2: den Querschnitt durch ein Festelektrolytröhrchen.

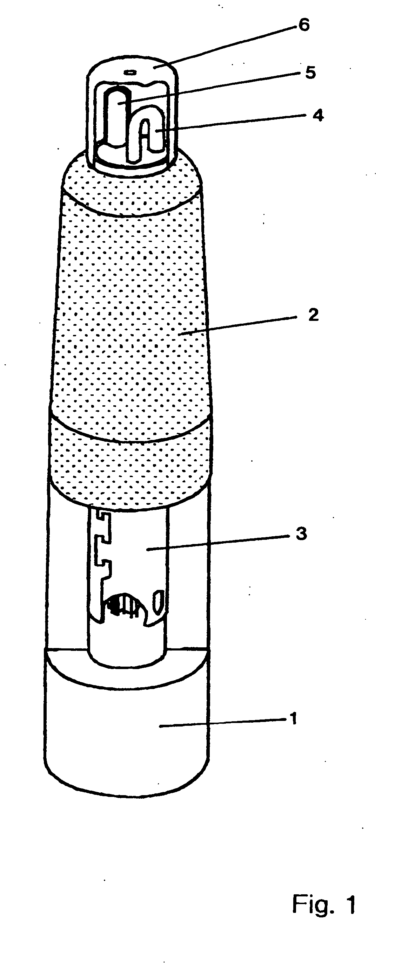

Die Messeinrichtung weist ein Trägerrohr 1 auf, in dem der Messkopf 2 gehalten ist, wobei der Messkopf 2 innerhalb des Trägerrohrs 1 mittels eines Kontaktstückes 3 mit einer Zuleitung zu Mess- und Auswertegeräten kontaktiert. Das Trägerrohr 1 ist in der Figur 1 nur ansatzweise dargestellt.

Am Eintauchende des Messkopfes ist neben einem Thermoelement 4 ein Festelektrolytröhrchen 5 angeordnet. Thermoelement 4 und Festelektrolytröhrchen 5 sind von einer Schutzkappe 6 umgeben und vor bzw. während des Eintauchens des Messkopfes in die Schmelze, insbesondere eine Eisen- oder Stahlschmelze, geschützt.

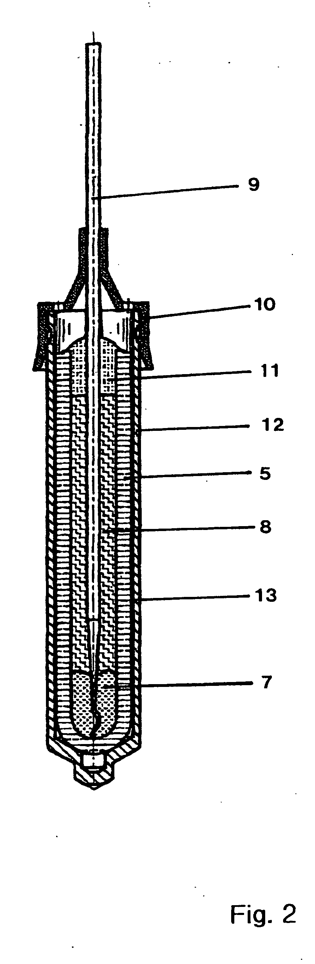

In Figur 2 ist das Festelektrolytröhrchen 5 im Schnitt dargestellt. Es ist aus stabilisiertem Zirkondioxid hergestellt und weist in seinem Inneren als Referenzmaterial 7 eine Mischung aus Chrom und Chromdioxid auf. Das darüber angeordnete Füllmaterial 8 ist beispielsweise Aluminiumoxid. In dem Festelektrolytröhrchen 5 ist zentrisch ein Molybdänstab als Elektrode 9 angeordnet. Die Elektrode 9 ragt aus dem offenen Ende des Festelektrolytröhrchens 5 heraus. Dieses offene Ende ist von einer Kappe 10 verschlossen, wobei das Füllmaterial 8 an seinem oberen Ende von einem gasdurchlässigen Zement 11 gehalten ist. Das Festelektrolytröhrchen 5 ist von einer Stahlkappe 12 umgeben, die das Röhrchen während des Eintauchens in die Metallschmelze zusätzlich schützt. Es schmilzt dann und gibt die auf dem Festelektrolytröhrchen 5 angeordnete Beschichtung 13 frei. Die Beschichtung ist vorzugsweise eine Mischung aus Kalziumzirkonat und Magnesiumfluorid.

In der Schmelze reagiert CaO mit Schwefel unter Bildung von CaS, wobei Sauerstoff frei wird, dessen Aktivität mit Hilfe des Festelektrolytröhrchens gemessen wird.

## Patentansprüche

1. Festelektrolytröhrchen für eine elektrochemische Meßzelle zur Bestimmung der Sauerstoffaktivität in Metall- oder Schlackeschmelzen mit einem geschlossenen Ende, **dadurch gekennzeichnet, daß** es an seiner äußeren Oberfläche eine Beschichtung (13) aus einer Mischung aus Kalziumzirkonat mit einem Fluorid aufweist.

2. Festelektrolytröhrchen nach Anspruch 1, **dadurch gekennzeichnet, daß** das Fluorid mindestens eines aus der Gruppe CaF₂, NaF, SrF₂, BaF₂, MgF₂ ist.

3. Festelektrolytröhrchen nach Anspruch 1 oder 2, **dadurch gekennzeichnet, daß** das Kalziumzirkonat stöchiometrisch ist.

4. Festelektrolytröhrchen nach einem der Ansprüche 1 bis 3, **dadurch gekennzeichnet, dass** die Beschichtung (13) 10 bis 100 µm dick ist.

5. Festelektrolytröhrchen nach einem der Ansprüche 1 bis 4, **dadurch gekennzeichnet, dass** die Beschichtung (13) die äußere Oberfläche nur teilweise bedeckt.

6. Messeinrichtung zur Bestimmung der Sauerstoffaktivität in Metall- oder Schlackeschmelzen mit einem an einem Ende eines Trägerrohrs angeordneten Messkopf, an dem eine elektrochemische Messzelle angeordnet ist, wobei die elektrochemische Messzelle ein einseitig geschlossenes Festelektrolytröhrchen gemäss Anspruch 1 aufweist, das an seinem geschlossenen Ende ein Referenzmaterial und eine Elektrode enthält, wobei die Elektrode aus dem entgegengesetzten Ende des Festelektrolytröhrchens hinausragt, und das Festelektrolytröhrchen (5) an seiner äußeren Oberfläche eine Beschichtung (13) aus einer Mischung aus Kalziumzirkonat mit einem Fluorid aufweist.

7. Messeinrichtung nach Anspruch 6, **dadurch gekennzeichnet, dass** das Fluorid mindestens eines aus der Gruppe CaF₂, NaF, SrF₂, BaF₂, MgF₂ ist.

8. Messeinrichtung nach Anspruch 6 oder 7, **dadurch gekennzeichnet, dass** das Kalziumzirkonat stöchiometrisch ist.

9. Messeinrichtung nach einem der Ansprüche 6 bis 8, **dadurch gekennzeichnet, dass** die Beschichtung (13) 10 bis 100 µm dick ist.

10. Messeinrichtung nach einem der Ansprüche 6 bis 9, **dadurch gekennzeichnet, dass** die Beschichtung (13) die äußere Oberfläche des Festelektrolytröhrchens (5) nur teilweise bedeckt.

11. Verwendung der Messeinrichtung nach einem der Ansprüche 6 bis 10 zur Bestimmung des Gehaltes von Schwefel, Silizium oder Kohlenstoff in Metall- oder Schlackeschmelzen, insbesondere in Stahl- oder Eisenschmelzen.

## Claims

1. Solid electrolyte tube for an electrochemical measuring cell for the determination of oxygen activity in metal or slag melts with one closed end, **characterized in that** it has on its outer surface a coating (13) of a mixture of calcium zirconate with a fluoride.

2. Solid electrolyte tube according to claim 1, **characterized in that** the fluoride is at least one from the group of CaF₂, NaF, SrF₂, BaF₂, MgF₂.

3. Solid electrolyte tube according to claim 1 or 2, **characterized in that** the calcium zirconate is stoichiometric.

4. Solid electrolyte tube according to any one of the claims 1 to 3, **characterized in that** the coating (13) is 10 to 100 µm thick.

5. Solid electrolyte tube according to any one of the claims 1 to 4, **characterized in that** the coating (13) only partly covers the outer surface.

6. Measuring device for the determination of oxygen activity in metal or slag melts with a measuring head provided with an electrochemical measuring cell, said head being provided on one end of a carrier tube, wherein the electrochemical measuring cell comprises a solid electrolyte tube closed on one side according to claim 1, said tube containing at its closed end a reference material and an electrode, the electrode projecting from the opposite end of the solid electrolyte tube, and the solid electrolyte tube (5) comprising on its outer surface a coating (13) of a mixture of calcium zirconate with a fluoride.

7. Measuring device according to claim 6, **characterized in that** the fluoride is at least one from the group of CaF₂, NaF, SrF₂, BaF₂, MgF₂.

8. Measuring device according to claim 6 or 7, **characterized in that** the calcium zirconate is stoichiometric.

9. Measuring device according to any one of the claims 6 to 8, **characterized in that** the coating (13) is 10 to 100 µm thick.

10. Measuring device according to any one of the claims 6 to 9, **characterized in that** the coating (13) only partly covers the outer surface of the solid electrolyte tube (5),

11. Use of the measuring device according to any one of the claims 6 to 10 for the determination of the concentration of sulfur, silicon or carbon in metal or slag melts, particularly in steel or iron melts.

## Revendications

1. Tube d'électrolyte solide pour une cellule de mesure électrochimique destinée à déterminer l'activité de l'oxygène dans des bains de métal ou de scories en fusion, comprenant une extrémité fermée, **caractérisé en ce qu'**il présente sur sa surface extérieure, un revêtement (13) en un mélange de zirconate de calcium avec un fluorure.

2. Tube d'électrolyte solide selon la revendication 1, **caractérisé en ce que** le fluorure est l'un au moins du groupe CaF₂, NaF, SrF₂, BaF₂, MgF.

3. Tube d'électrolyte solide selon la revendication 1 ou la revendication 2, **caractérisé en ce que** le zirconate de calcium est stoechiométrique.

4. Tube d'électrolyte solide selon l'une des revendications 1 à 3, **caractérisé en ce que** le revêtement (13) est d'une épaisseur de 10 à 100 µm.

5. Tube d'électrolyte solide selon l'une des revendications 1 à 4, **caractérisé en ce que** le revêtement (13) ne recouvre que partiellement la surface extérieure.

6. Dispositif de mesure destiné à déterminer l'activité de l'oxygène dans des bains de métal ou de scories en fusion, comprenant une tête de mesure, qui est placée à une extrémité d'un tube porteur, et sur laquelle est agencée une cellule de mesure électrochimique, la cellule de mesure électrochimique comprenant un tube d'électrolyte solide, fermé à une extrémité, selon la revendication 1, qui renferme, à son extrémité fermée, un matériau de référence et une électrode, l'électrode sortant hors de l'extrémité opposée du tube d'électrolyte solide, et le tube d'électrolyte solide (5) présentant, sur sa surface extérieure, un revêtement (13) en un mélange de zirconate de calcium avec un fluorure.

7. Dispositif de mesure selon la revendication 6, **caractérisé en ce que** le fluorure est l'un au moins du groupe CaF₂, NaF, SrF₂, HaF₂, MgF₂.

8. Dispositif de mesure selon la revendication 6 ou la revendication 7, **caractérisé en ce que** le zirconate de calcium est stoechiométrique.

9. Dispositif de mesure selon l'une des revendications 6 à 8, **caractérisé en ce que** le revêtement (13) est d'une épaisseur de 10 à 100 µm.

10. Dispositif de mesure selon l'une des revendications 6 à 9, **caractérisé en ce que** le revêtement (13) ne recouvre que partiellement la surface extérieure du tube d'électrolyte solide (5).

11. Utilisation du dispositif de mesure selon l'une des revendications 6 à 10, pour déterminer la teneur en soufre, silicium ou carbone dans des bains de métal ou de scories en fusion, notamment dans des bains d'acier ou de fer en fusion.
